# EUROPÄISCHE PATENTANMELDUNG

(11) **EP 3 144 334 A1**
(43) Veröffentlichungstag der Anmeldung: **22.03.2017**
(21) Anmeldenummer: 15185603.6
(22) Anmeldetag: 17.09.2015
(51) Int. Cl.: C08G 59/18, C08G 59/50, C09D 163/00

(54) **HÄRTER FÜR EMISSIONSARME EPOXIDHARZ-ZUSAMMENSETZUNGEN**

(71) Anmelder: Sika Technology AG, 6340 Baar (CH)
(72) Erfinder: Kasemi, Edis, 8046 Zürich (CH); Kramer, Andreas, 8006 Zürich (CH); Stadelmann, Ursula, 8046 Zürich (CH); Burckhardt, Urs, 8049 Zürich (CH)
(74) Vertreter: Sika Patent Attorneys

(57) **Zusammenfassung**

Die vorliegende Erfindung betrifft einen Härter für Epoxidharz-Zusammensetzungen enthaltend mindestens ein Amin der Formel (I) und mindestens ein Amin der Formel (II). Der Härter ist in einem einfachen Prozess aus der Umsetzung von einem Glycidylether mit einem Überschuss Amin der Formel (II) herstellbar, wobei das Amin der Formel (I) in hoher Reinheit erhalten wird.

Der Härter ist überraschend niedrigviskos, neigt nicht zu Blushing und verdünnt die üblichen Epoxidharze sehr gut. Er ermöglicht emissionsarme Epoxidharz-Beschichtungen mit guter Verarbeitbarkeit, schneller Aushärtung, hoher Härte, schönen Oberflächen und wenig Vergilbung, welche auch bei tiefen Temperaturen und hoher Luftfeuchtigkeit schnell und störungsfrei aushärten.

## Beschreibung

### Technisches Gebiet

Die Erfindung betrifft das Gebiet der Härter für Epoxidharze, Epoxidharz-Zusammensetzungen, sowie deren Verwendung, insbesondere als Beschichtung, Belag oder Anstrich.

### Stand der Technik

Für Beschichtungszwecke geeignete Epoxidharz-Zusammensetzungen sollen eine möglichst niedrige Viskosität aufweisen, damit sie bei Umgebungstemperatur gut verarbeitbar sind. Weiterhin sollen sie möglichst schnell und störungsfrei aushärten, auch bei feucht-kalten Bedingungen, und dabei eine ebenmässige Oberfläche ohne Trübungen, Flecken oder Krater ausbilden. Schliesslich soll die ausgehärtete Beschichtung eine hohe Härte bei geringer Sprödigkeit besitzen, um mechanischer Beanspruchung möglichst gut zu widerstehen. Für optisch anspruchsvolle Anwendungen, beispielsweise Deckbeläge von Fussböden, soll eine Beschichtung ausserdem einen hohen Glanzgrad und eine möglichst geringe Neigung zum Vergilben unter Lichteinfluss aufweisen.

Aus dem Stand der Technik bekannte Härter für Epoxidharz-Beschichtungen enthalten typischerweise Reaktionsprodukte ("Addukte") aus der Umsetzung von Polyaminen mit Epoxiden, insbesondere mit Bisphenol-Flüssigharzen. Solche Addukte ermöglichen eine rasche Aushärtung, sind aber sehr hochviskos, weshalb die Härter zur Einstellung einer handhabbaren Viskosität üblicherweise beträchtliche Anteile an nicht adduktierten niedrigmolekularen Polyaminen und/oder Verdünnern enthalten. Die nicht adduktierten niedrigmolekularen Polyamine sind typischerweise geruchsintensiv und führen zu verstärktem Auftreten von Blushing-Effekten. Als "Blushing-Effekte" werden bei der Aushärtung auftretende Oberflächenmängel wie Trübungen, Flecken, Rauheit und Klebrigkeit bezeichnet, welche durch Salzbildung ("Blushing") von Aminen mit Kohlendioxid (CO₂) aus der Luft verursacht werden und besonders bei hoher Luftfeuchtigkeit und tiefen Temperaturen auftreten. Die Verdünner vermindern typischerweise Blushing-Effekte und verbessern Oberflächenqualität und Sprödigkeit der Beschichtung, werden aber bei der Aushärtung nicht in die Harzmatrix eingebaut und können durch Verdampfungs- oder Diffusionsprozesse freigesetzt werden. Heutzutage werden aber zunehmend emissionsarme Produkte gewünscht, die nach der Aushärtung einen geringen Gehalt an freisetzbaren Substanzen aufweisen. Für emissionsarme Epoxidharz-Zusammensetzungen können Verdünner, wie beispielsweise Benzylalkohol, deshalb nur in geringer Menge oder gar nicht verwendet werden.

### Darstellung der Erfindung

Aufgabe der vorliegenden Erfindung ist es daher, einen niedrigviskosen und geruchsarmen Härter für raumtemperaturhärtende Epoxidharz-Zusammensetzungen zur Verfügung zu stellen, welcher emissionsarme Epoxidharz-Beschichtungen mit guter Verarbeitbarkeit, schneller Aushärtung, hoher Härte und schönen Oberflächen ermöglicht.

Diese Aufgabe wird mit einem Härter wie in Anspruch 1 beschrieben gelöst. Der Härter ist so niedrigviskos, dass er auch ohne Lösemittel oder Verdünner oder weitere Amine gut verarbeitbare Epoxidharz-Zusammensetzungen ermöglicht, welche überraschend schnell aushärten und Filme oder Körper mit hoher Härte und ebenmässiger, glänzender Oberfläche bilden, welche überraschenderweise kaum vergilben. Auch bei tiefen Temperaturen und hoher Luftfeuchtigkeit, wie beispielsweise 8 °C und 80 % relative Feuchtigkeit, härten solche Zusammensetzungen überraschenderweise schnell und störungsfrei aus und bilden sehr schöne Oberflächen.

Der erfindungsgemässe Härter ist in einem einfachen Verfahren aus dem Amin der Formel (II) und einem Glycidylether herstellbar, wobei das Amin der Formel (I) in hoher Reinheit entsteht und überschüssiges Amin der Formel (II) im Härter verbleibt, ohne dass dadurch Blushing-Effekte oder übermässige Geruchsbelastungen entstehen.

Das im Härter enthaltene Amin der Formel (I) ist im Vergleich mit anderen Addukt-Aminen überraschend niedrigviskos und ermöglicht eine überraschend schnelle Aushärtung, ohne Blushing-Effekte zu verursachen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter für Epoxidharze, umfassend
- mindestens ein Amin der Formel (I), 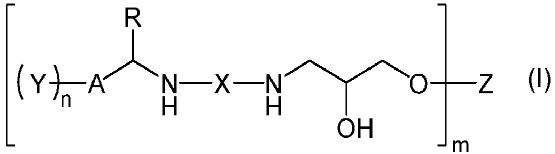
- und mindestens ein Amin der Formel (II), 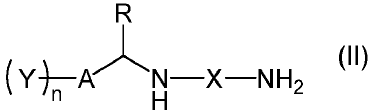
wobei
X für 1,2-Ethylen oder 1,2-Propylen steht,
R für einen Wasserstoff-Rest oder für einen Kohlenwasserstoff-Rest mit 1 bis 6 C-Atomen steht,
A für einen fünf-, sechs- oder siebengliedrigen, im Ring gegebenenfalls ein Sauerstoff-, Schwefel- oder Stickstoffatom aufweisenden Cycloalkyl- oder Aryl-Rest mit 4 bis 7 C-Atomen steht,
Y für gleiche oder verschiedene Reste ausgewählt aus der Gruppe bestehend aus Alkyl, Alkoxy und Dialkylamino mit 1 bis 18 C-Atomen steht,
n für 0 oder 1 oder 2 oder 3 steht,
m für 1 oder 2 oder 3 steht, und
Z für einen m-wertigen, gegebenenfalls Ether-Sauerstoff aufweisenden Kohlenwasserstoff-Rest mit einem Molekulargewicht im Bereich von 56 bis 1500 g/mol steht.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.
Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.
Als "Aminwasserstoff" werden die Wasserstoffatome von primären und sekundären Aminogruppen bezeichnet.
Als "Aminwasserstoff-Equivalentgewicht" wird die Masse eines Amins oder einer Amin-haltigen Zusammensetzung, die ein Molequivalent Aminwasserstoff enthält, bezeichnet.
Als "Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.
Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird. Eine gestrichelte Linie in den Formeln in diesem Dokument stellt jeweils die Bindung zwischen einem Substituenten und dem zugehörigen Molekülrest dar. Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.
Als "Raumtemperatur" wird eine Temperatur von 23 °C bezeichnet.

Der Härter ist lagerstabil; das heisst, er kann bei Raumtemperatur in einem geeigneten Gebinde während längerer Zeit, typischerweise während 3 bis 6 Monaten und länger, aufbewahrt werden, ohne dass er sich in seinen Anwendungs- und Gebrauchseigenschaften, insbesondere der Viskosität, durch die Lagerung in einem relevanten Ausmass verändert und somit seine Verwendbarkeit als Härter für Epoxidharz-Zusammensetzungen verliert.

Bevorzugt weisen X, R, A, Y und n im Amin der Formel (I) jeweils die identische Bedeutung auf wie im Amin der Formel (II).

X steht bevorzugt für 1,2-Propylen. Ein solcher Härter ist besonders gut verträglich mit üblichen Epoxidharzen und ermöglichen Epoxidharz-Zusammensetzungen mit besonders hoher Härte und/oder besonders schönen Oberflächen und besonders geringer Vergilbung.

R steht bevorzugt für einen Wasserstoff-Rest oder für Methyl oder für Phenyl. Diese Härter sind besonders einfach zugänglich.
Besonders bevorzugt steht R für einen Wasserstoff-Rest oder für Methyl, insbesondere für einen Wasserstoff-Rest. Diese Härter sind besonders einfach zugänglich und ermöglichen besonders niedrigviskose Härter und Epoxidharz-Zusammensetzungen.

In einer Ausführungsform steht A bevorzugt für einen fünf- oder sechsgliedrigen, im Ring gegebenenfalls ein Sauerstoffatom aufweisenden Cycloalkyl-Rest mit 4 bis 6 C-Atomen,
Insbesondere steht A dabei für Cyclohexyl oder Cyclopentyl, am meisten bevorzugt für Cyclohexyl, und n für 0. Solche Härter ermöglichen Epoxidharz-Zusammensetzungen mit besonders niedriger Viskosität und besonders geringer Vergilbung.

In einer bevorzugten Ausführungsform steht A für einen gegebenenfalls mit Y substituierten Phenyl-Rest. Diese Härter ermöglichen eine besonders schnelle Aushärtung und besonders schöne Oberflächen.

Y steht bevorzugt für gleiche oder verschiedene Reste ausgewählt aus der Gruppe bestehend aus Alkyl, Alkoxy und Dialkylamino mit jeweils 1 bis 12, insbesondere 1 bis 4, C-Atomen. Besonders bevorzugt steht Y für Methyl oder für Methoxy oder für Dimethylamino. Ganz besonders bevorzugt steht Y für Methoxy oder für Dimethylamino.
Bevorzugt steht der Rest Y in meta- und/oder para-Stellung. Im Fall von n=1 steht der Rest Y insbesondere in para-Stellung.

n steht bevorzugt für 0 oder 1 oder 2, insbesondere für 0 oder 1.
Besonders bevorzugt steht n für 0. Diese Härter ermöglichen besonders niedrigviskose Epoxidharz-Zusammensetzungen.

Für den Fall, dass n für 1 steht, steht A insbesondere für einen mit Y substituierten Phenyl-Rest und Y steht insbesondere für Methoxy oder für Dimethylamino. Solche Härter ermöglichen Epoxidharz-Zusammensetzungen mit ganz besonders schneller Aushärtung.

Besonders bevorzugt stehen X für 1,2-Propylen, R für einen Wasserstoff-Rest, A für einen Phenyl-Rest und n für 0. Ein solcher Härter ermöglicht Epoxidharz-Zusammensetzungen mit einer sehr schnellen Aushärtung und besonders schönen Oberflächen, welche überraschenderweise kaum vergilben.

m steht bevorzugt für 1 oder 2.
Ein Härter, bei welchem m für 1 steht, ermöglicht besonders niedrigviskose Epoxidharz-Zusammensetzungen.
Ein Härter, bei welchem m für 2 steht, ermöglicht eine besonders schnelle Aushärtung.

Z weist bevorzugt ein Molekulargewicht im Bereich von 56 bis 750 g/mol auf. Besonders bevorzugt weist Z im Mittel ein Molekulargewicht im Bereich von 56 bis 350 g/mol auf.
Ein solcher Härter ermöglicht besonders niedrigviskose Epoxidharz-Zusammensetzungen.

Z steht besonders bevorzugt für einen Rest ausgewählt aus der Gruppe bestehend aus den einwertigen Resten Phenyl, Kresyl, p-tert.Butylphenyl, 4-Dodecylphenyl, 3-(8,11,14-Pentadecatrienyl)phenyl, Benzyl, Butyl, Hexyl, 2-Ethylhexyl, C₈₋₁₀-Alkyl, C₁₂₋₁₃-Alkyl und C₁₂₋₁₄-Alkyl, und den zweiwertigen Resten 1,4-Butylen, 1,6-Hexylen, Neopentylen und den Resten der Formeln (IIIa), (IIIb), (IIIc), (IIId) und (IIIe), 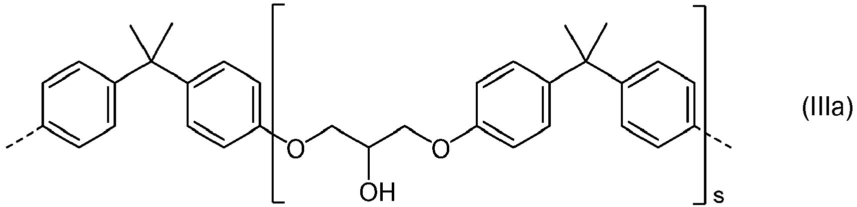 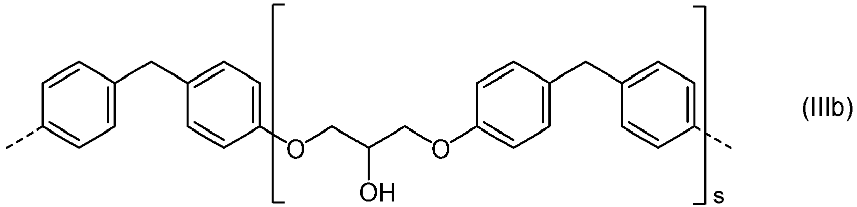 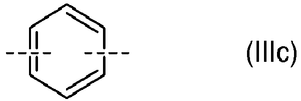 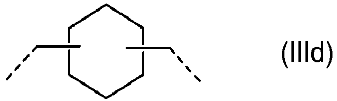 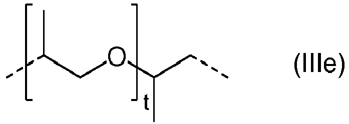 wobei s für 0 bis 3 und t für 1 bis 20 stehen.
s steht bevorzugt für 0 oder 1 oder 2, besonders bevorzugt für 0 oder 1, insbesondere für 0.
Ein Amin der Formel (I), bei welchem Z für einen Rest der Formel (IIIa) oder (IIIb) steht, liegt bevorzugt in Form eines technischen Gemisches vor, welches hauptsächlich aus Aminen der Formel (I) besteht, bei welchen s für 0 oder 1 steht. Bevorzugt steht s im Mittel für einen Wert von kleiner als 0.2. Besonders bevorzugt steht s im Mittel für einen Wert im Bereich von 0 bis 0.18, insbesondere 0 bis 0.15.

t steht bevorzugt für 1 bis 10.
Ein Amin der Formel (I), bei welchem Z für einen Rest der Formel (IIIe) steht, liegt bevorzugt in Form eines technischen Gemisches vor, welches hauptsächlich aus Aminen der Formel (I) besteht, bei welchen t im Mittel für einen Wert von 1 bis 7, insbesondere von 1 bis 3, steht.

Bevorzugt steht Z für einen aromatischen Rest. Ein solcher Härter ermöglicht eine besonders schnelle Aushärtung und besonders schöne Oberflächen.

Ganz besonders bevorzugt ist Z ausgewählt aus Kresyl, insbesondere ortho-Kresyl, und Resten der Formel (IIIa) und (IIIb) und (IIIc).
Davon bevorzugt ist Kresyl oder ein Rest der Formel (IIIa) oder (IIIb).
Ein Härter, bei welchem Z für Kresyl steht, ermöglicht Epoxidharz-Zusammensetzungen mit einer besonders niedrigen Viskosität und einer schnellen Aushärtung.
Ein Härter, bei welchem Z für Rest der Formel (IIIa) und/oder (IIIb) steht, ermöglicht Epoxidharz-Zusammensetzungen mit niedriger Viskosität und einer besonders schnellen Aushärtung.

Im Härter ist das Amin der Formel (I) ganz besonders bevorzugt ausgewählt aus 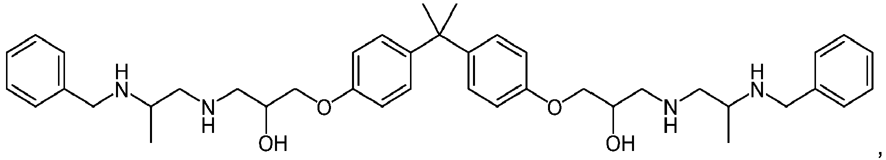 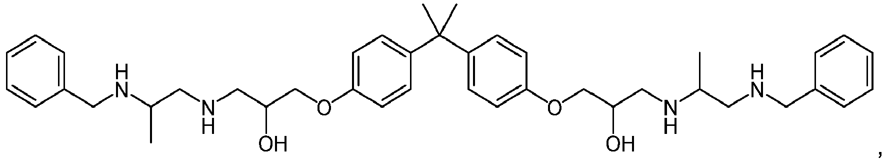 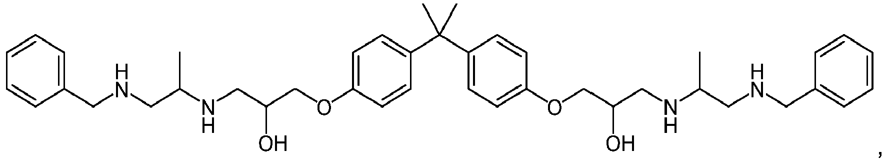 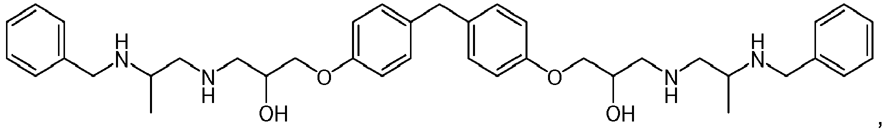 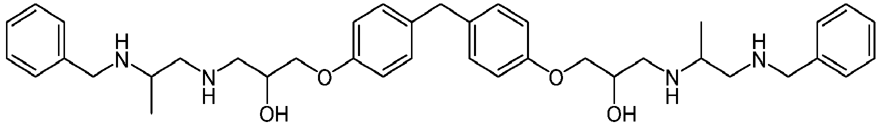 und 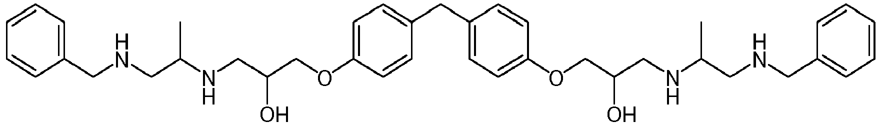 und Kombinationen aus zwei oder mehreren dieser Amine. Diese Amine ermöglichen Epoxidharz-Zusammensetzungen mit niedriger Viskosität, besonders schneller Aushärtung, besonders hoher Härte, besonders schönen Oberflächen und besonders wenig Vergilbung unter Lichteinfluss.

Im Härter ist das Amin der Formel (I) weiterhin ganz besonders bevorzugt ausgewählt aus 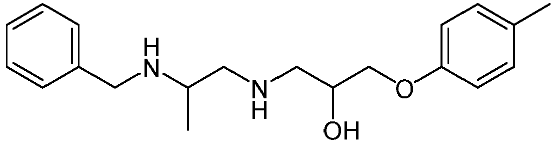 und 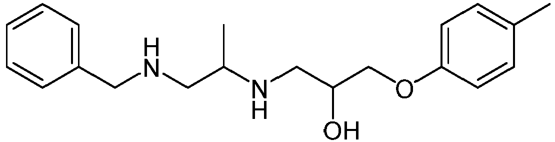 und Kombinationen dieser Amine. Diese Amine ermöglichen Epoxidharz-Beschichtungen mit besonders niedriger Viskosität, schneller Aushärtung, besonders hoher Härte, besonders schönen Oberflächen und ganz besonders wenig Vergilbung unter Lichteinfluss.

Im Härter ist das Amin der Formel (II) bevorzugt ausgewählt aus N-Cyclopentylmethyl-1,2-ethandiamin, N-Cyclohexylmethyl-1,2-ethandiamin, N¹-Cyclopentylmethyl-1,2-propandiamin oder N²-Cyclopentylmethyl-1,2-propandiamin oder ein Gemisch dieser Isomeren, N¹-Cyclohexylmethyl-1,2-propandiamin oder N²-Cyclohexylmethyl-1,2-propandiamin oder ein Gemisch dieser Isomeren, N-Benzyl-1,2-ethandiamin, N-(4-Methoxybenzyl)-1,2-ethandiamin, N-(4-(Dimethylamino)benzyl)-1,2-ethandiamin, N-(1-Phenylethyl)-1,2-ethandiamin, N-Benzhydryl-1,2-ethandiamin, N-(1-(4'-Methyl)phenylethyl)-1,2-ethandiamin, N-(1-(4'-Methoxy)phenylethyl)-1,2-ethandiamin, N¹-Benzyl-1,2-propandiamin oder N²-Benzyl-1,2-propandiamin oder ein Gemisch dieser Isomeren, N¹-(4-Methoxybenzyl)-1,2-propandiamin oder N²-(4-Methoxybenzyl)-1,2-propandiamin oder ein Gemisch dieser Isomeren, N¹-(4-(Dimethylamino)benzyl)-1,2-propandiamin oder N²-(4-(Dimethylamino)benzyl)-1,2-propandiamin oder ein Gemisch dieser Isomeren, N¹-(1-Phenylethyl)-1,2-propandiamin oder N²-(1-Phenylethyl)-1,2-propandiamin oder ein Gemisch dieser Isomeren, N¹-Benzhydryl-1,2-propandiamin oder N²-Benzhydryl-1,2-propandiamin oder ein Gemisch dieser Isomeren, N¹-(1-(4'-Methyl)phenylethyl)-1,2-propandiamin oder N²-(1-(4'-Methyl)-phenylethyl)-1,2-propandiamin oder ein Gemisch dieser Isomeren oder N¹-(1-(4'-Methoxy)phenylethyl)-1,2-propandiamin oder N²-(1-(4'-Methoxy)phenyl-ethyl)-1,2-propandiamin oder ein Gemisch dieser Isomeren.
Davon bevorzugt sind N¹-Benzyl-1,2-propandiamin oder N²-Benzyl-1,2-propandiamin oder ein Gemisch dieser Isomeren, N¹-(4-Methoxybenzyl)-1,2-propandiamin oder N²-(4-Methoxybenzyl)-1,2-propandiamin oder ein Gemisch dieser Isomeren, N¹-(4-(Dimethylamino)benzyl)-1,2-propandiamin oder N²-(4-(Dimethylamino)benzyl)-1,2-propandiamin oder ein Gemisch dieser Isomeren.

Am meisten bevorzugt als Amin der Formel (II) ist N¹-Benzyl-1,2-propandiamin oder N²-Benzyl-1,2-propandiamin oder ein Gemisch dieser Isomeren, im Folgenden auch als N-Benzyl-1,2-propandiamin bezeichnet.

Das Amin der Formel (II) wird bevorzugt eingesetzt in Form eines mittels Destillation gereinigen Reaktionsprodukts aus der Alkylierung von 1,2-Ethylendiamin oder 1,2-Propylendiamin, insbesondere aus der reduktiven Alkylierung mit einem Aldehyd oder Keton. Ein solches mittels Destillation gereinigtes Reaktionsprodukt ermöglicht besonders schnelle Aushärtungsgeschwindigkeiten und besonders hohe Härten.

Es kann vorteilhaft sein, wenn der Härter eine Kombination aus mehreren Aminen der Formel (I) enthält, insbesondere eine Kombination aus Aminen der Formel (I), welche unterschiedliche Reste Z aufweisen. Insbesondere kann es vorteilhaft sein, wenn der Härter eine Kombination aus einem Amin der Formel (I), bei welchem m für 1 steht, und einem Amin der Formel (II), bei welchem m für 2 steht, aufweist. Eine solche Kombination ermöglicht besonders niedrigviskose Härter mit besonders schneller Aushärtung.

Das Amin der Formel (I) wird bevorzugt erhalten aus der Umsetzung von mindestens einem Amin der Formel (II) mit mindestens einem Glycidylether der Formel (IV).

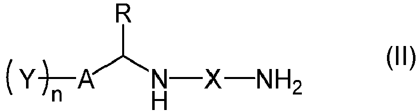

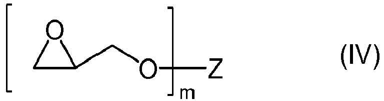

In den Formeln (II) und (IV) weisen X, R, A, Y, n, m und Z die bereits genannten Bedeutungen auf.

Bevorzugt wird das Amin der Formel (I) im erfindungsgemässen Härter in Form eines Reaktionsprodukts aus der Umsetzung von mindestens einem Amin der Formel (II) mit mindestens einem Glycidylether der Formel (IV) eingesetzt.

Als Amin der Formel (II) für die beschriebene Umsetzung geeignet sind insbesondere die bereits genannten. Besonders geeignet ist N-Benzyl-1,2-propandiamin.

Als Glycidylether für die beschriebenen Umsetzung geeignet sind insbesondere
- Monoglycidylether wie insbesondere Phenylglycidylether, Kresylglycidylether, Guaiacolglycidylether, 4-Methoxyphenylglycidylether, 4-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether oder Fettalkoholglycidylether wie insbesondere C₈- bis C₁₀-Alkyl-glycidylether oder C₁₂- bis C₁₃-Alkylglycidylether oder C₁₂- bis C₁₄-Alkylglycidylether;
- Diglycidylether wie insbesondere 1,4-Butandioldiglycidylether, 1,6-Hexandioldiglycidylether, Neopentylendiglycidylether, 1,4-Cyclohexandimethanoldiglycidylether, Diglycidylether von Polyethylen- oder Polypropylenglykolen wie insbesondere Dipropylenglykol-Diglycidylether, Bisphenol-A-Diglycidylether oder Bisphenol-F-Diglycidylether oder Mischungen von Bisphenol-A-und Bisphenol-F-Diglycidylether, Brenzkatechin-Diglycidylether, Resorcinol-Diglycidylether, Hydrochinon-Diglycidylether oder die Glycidylisierungsprodukte von weiteren Bisphenolen wie insbesondere Bis(4-hydroxy-3-methylphenyl)methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis-(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxybiphenyl (DOD), Bis(2-hydroxynaphth-1-yl)methan, Bis(4-hydroxynaphth-1-yl)methan oder 1,5-Dihydroxynaphthalin;
- Triglycidylether wie insbesondere Trimethylolpropan-Triglycidylether.
Die genannten Glycidylether werden insbesondere in kommerziell verfügbaren technischen Qualitäten verwendet.
Davon bevorzugt sind die Mono- oder die Diglycidylether, insbesondere Phenylglycidylether, Kresylglycidylether, p-tert.Butylphenylglycidylether, 4-Dodecylphenylglycidylether, Cardanolglycidylether, Benzylglycidylether, Butylglycidylether, Hexylglycidylether, 2-Ethylhexylglycidylether, die Fettalkoholglycidylether, 1,4-Butandioldiglycidylether, 1,6-Hexandioldiglycidylether, Neopentylendiglycidylether, Bisphenol-A-, -F- oder -A/F-Diglycidylether, Resorcinol-Diglycidylether, 1,4-Cyclohexandimethanol-Diglycidylether oder Dipropylenglykol-Diglycidylether.

Besonders bevorzugt sind Kresylglycidylether oder Bisphenol-A-, -F- oder -A/F-Diglycidylether.
Insbesondere bevorzugt sind Bisphenol-A-, -F- oder -A/F-Diglycidylether, insbesondere kommerziell verfügbare Flüssigharze wie insbesondere Araldite^{®} GY 240, Araldite^{®} GY 250, Araldite^{®} GY 281, Araldite^{®} GY 282, Araldite^{®} GY 285, Araldite^{®} PY 304 oder Araldite^{®} PY 720 (alle von Huntsman), oder D.E.R. ^{®} 330, D.E.R. ^{®} 331, D.E.R. ^{®} 332, D.E.R. ^{®} 336, D.E.R. ^{®} 351, D.E.R. ^{®} 352, D.E.R. ^{®} 354 oder D.E.R. ^{®} 356 (alle von Dow).
Weiterhin insbesondere bevorzugt sind ortho-Kresylglycidylether, insbesondere ein kommerziell verfügbarer Kresylglycidylether wie insbesondere Araldite^{®} DY-K (von Huntsman), Polypox™ R6 (von Dow), Heloxy™ KR (von Momentive) oder Erisys^{®} GE-10 (von CVC Spec. Chem.).

Bei der Umsetzung ist das Amin der Formel (II) bevorzugt im Überschuss vorhanden und der Überschuss wird nach der Umsetzung bevorzugt nicht aus dem Reaktionsprodukt entfernt. Auf diese Weise wird direkt ein erfindungsgemässer Härter erhalten.
Bevorzugt liegt das Molverhältnis zwischen dem Amin der Formel (II) und den Epoxidgruppen des Glycidylethers der Formel (IV) im Bereich von1.1:1 bis 20:1, besonders bevorzugt im Bereich von 1.2:1 bis 15:1, insbesondere im Bereich von 1.5:1 bis 10:1.
Bevorzugt liegt die Temperatur bei der Umsetzung im Bereich von 40 bis 120 °C, insbesondere 60 bis 100 °C.

Das Reaktionsprodukt aus dieser Herstellung kann neben dem Amin der Formel (I) und dem Amin der Formel (II) Anteile von höhermolekularen Nebenprodukten in Form von mehrfach adduktiertem Amin der Formel (II) enthalten, beispielsweise im Fall von m=1 zum Beispiel 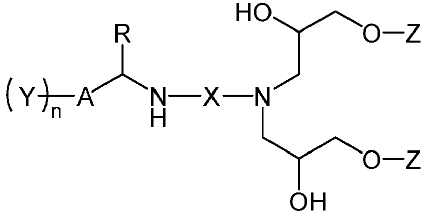 oder 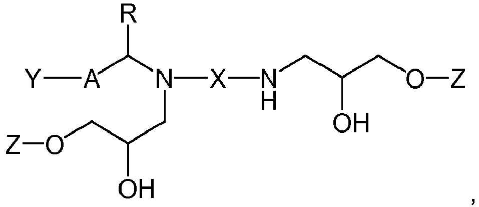 oder im Fall von m=2 zum Beispiel

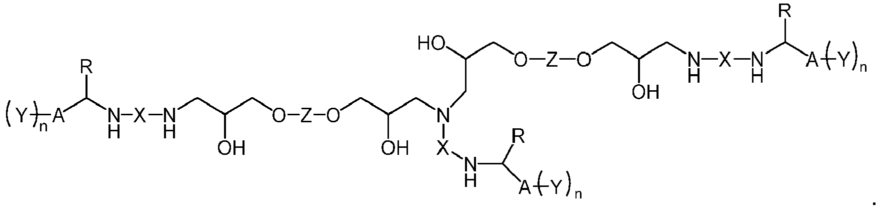

Ein auf die beschriebene Weise hergestelltes Reaktionsprodukt weist einen besonders niedrigen Gehalt an solchen höhermolekularen Nebenprodukten auf. Es zeichnet sich durch eine besonders niedrige Viskosität und besonders gute Eigenschaften als Härter für Epoxidharze, insbesondere eine schnelle Aushärtung, aus.

Besonders bevorzugt enthält der Härter ein Reaktionsprodukt aus der Umsetzung von N-Benzyl-1,2-propylendiamin und mindestens einem Glycidylether ausgewählt aus Kresylglycidylethern und Bisphenol-A- und -F- und -A/F-Diglycidylether-Flüssigharzen.

Bevorzugt ist das Reaktionsprodukt weitgehend frei von 1,2-Ethylendiamin und/oder 1,2-Propylendiamin. Es enthält insbesondere weniger als 1 Gewichts-%, bevozugt weniger als 0.5 Gewichts-%, besonders bevorzugt weniger als 0.1 Gewichts-%, 1,2-Ethylendiamin und/oder 1,2-Propylendiamin.

Der Härter kann neben mindestens einem Amin der Formel (I) und mindestens einem Amin der Formel (II) zusätzlich mindestens ein weiteres Amin, das nicht der Formel (I) oder (II) entspricht, und/oder mindestens einen Beschleuniger enthalten.
Das weitere Amin ist dabei insbesondere nicht 1,2-Ethylendiamin, nicht 1,2-Propylendiamin, kein Amin der Formel (I) mit Werten von m > 3 und/oder kein höhermolekulares Nebenprodukt in Form von mehrfach adduktiertem Amin der Formel (II).

Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen. Als Beschleuniger bevorzugt sind Säuren, tertiäre Amine oder Mannich-Basen.
Am meisten bevorzugt ist Salicylsäure oder 2,4,6-Tris(dimethylaminomethyl)-phenol oder eine Kombination davon.

Als weiteres Amin geeignet sind insbesondere Polyamine, welche mindestens zwei, insbesondere mindestens drei, gegenüber Epoxidgruppen reaktive Aminwasserstoffe aufweisen, insbesondere die folgenden Polyamine:
- Polyamine mit ein oder zwei sekundären Aminogruppen, insbesondere Produkte aus der reduktiven Alkylierung von primären aliphatischen Polyaminen mit Aldehyden oder Ketonen, welche nicht der Formel (II) entsprechen, wie insbesondere N,N'-Dibenzyl-1,2-ethandiamin, N,N'-Dibenzyl-1,2-propandiamin, N-Benzyl-1,3-bis(aminomethyl)benzol, N,N'-Dibenzyl-1,3-bis(aminomethyl)benzol, N-2-Ethylhexyl-1,3-bis(aminomethyl)benzol, N,N'-Bis(2-ethylhexyl)-1,3-bis(aminomethyl)benzol, oder partiell styrolisierte Polyamine wie insbesondere styrolisiertes MXDA (erhältlich als Gaskamine^{®} 240 von Mitsubishi Gas Chemical);
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2-oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol;
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylendi- oder -triamine sind Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000, oder entsprechende Amine von BASF oder Nitroil;
- sekundäre Aminogruppen aufweisende Polyamine mit zwei primären aliphatischen Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-aminopropyl)amin oder Tris(3-aminopropyl)amin;
- aromatische Polyamine, wie insbesondere m- und p-Phenylendiamin, 4,4'-, 2,4' und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid^{®} 100, 125, 140 oder 150 (von Cognis), Aradur^{®} 223, 250 oder 848 (von Huntsman), Euretek^{®} 3607 oder 530 (von Huntsman) oder Beckopox^{®} EH 651, EH 654, EH 655, EH 661 oder EH 663 (von Cytec);
- Phenalkamine, auch Mannich-Basen genannt, insbesondere Umsetzungsprodukte aus einer Mannich-Reaktion von Phenolen, insbesondere Cardanol, mit Aldehyden, insbesondere Formaldehyd, insbesondere die kommerziell erhältlichen Phenalkamine Cardolite^{®} NC-541, NC-557, NC-558, NC-566, Lite 2001, Lite 2002, NX-4943, NX-5607 oder NX-5608 (von Cardolite), Aradur^{®} 3440, 3441, 3442 oder 3460 (von Huntsman) oder Beckopox^{®} EH 614, EH 621, EH 624, EH 628 oder EH 629 (von Cytec);
- weitere Addukte von Polyaminen mit Epoxiden oder Epoxidharzen, insbesondere Addukte mit Diepoxiden im Molverhältnis von ungefähr 2/1, oder Addukte mit Monoepoxiden im Molverhältnis von ungefähr 1/1, oder Umsetzungsprodukte aus Polyaminen und Epichlorhydrin, insbesondere jenes von 1,3-Bis(aminomethyl)benzol, kommerziell erhältlich als Gaskamine^{®} 328 (von Mitsubishi Gas Chemical);
- oder höhermolekulare Nebenprodukte aus der vorgängig beschriebenen Herstellung des Amins der Formel (I), insbesondere in Form von mehrfach adduktiertem Amin der Formel (II), wie vorgängig beschrieben.

Es kann vorteilhaft sein, wenn der erfindungsgemässe Härter eine Kombination aus zwei oder mehr weiteren Aminen enthält.

Als weiteres Amin bevorzugt sind Polyamine mit einer primären und einer sekundären Aminogruppe, welche nicht der Formel (II) entsprechen, insbesondere N-Benzyl-1,3-bis(aminomethyl)benzol, N-2-Ethylhexyl-1,3-bis(aminomethyl)benzol oder styrolisiertes MXDA.

Als weiteres Amin bevorzugt sind weiterhin primäre Diamine mit einem Molekulargewicht von mindestens 120 g/mol, insbesondere mindestens 150 g/mol, insbesondere TMD, H₁₂-MDA, IPDA, 2- oder 4-Methyl-1,3-diaminocyclohexan oder Mischungen davon, 1,3-Bis(aminomethyl)cyclohexan, 1,4-Bis(aminomethyl)cyclohexan, NBDA oder MXDA.

Als weiteres Amin bevorzugt sind weiterhin Ethergruppen-haltige aliphatische primäre Di- oder Triamine, insbesondere Polyoxyalkylendi- oder -triamine mit einem mittleren Molekulargewicht im Bereich von 200 bis 500 g/mol, insbesondere Jeffamine^{®} D-230 oder Jeffamine^{®} T-403 (beide von Huntsman), oder cycloaliphatische Ethergruppen-haltige Diamine aus der Propoxylierung und nachfolgenden Aminierung von 1,4-Dimethylolcyclohexan, insbesondere Jeffamine^{®} RFD-270 (von Huntsman).

Als weiteres Amin bevorzugt sind weiterhin Addukte, welche nicht der Formel (I) entsprechen, insbesondere ein Addukt aus mindestens einem Polyamin mit 2 bis 12 C-Atomen und mindestens einem Epoxid.

Ein besonders bevorzugtes Addukt ist ein Addukt aus mindestens einem Polyamin ausgewählt aus 1,2-Ethylendiamin, 1,2-Propylendiamin und MPMD, mit mindestens einem aromatischen Monoepoxid, welche im Molverhältnis von ungefähr 1/1 umgesetzt sind. Während der Umsetzung kann das Polyamin im Überschuss vorhanden gewesen und nach der Umsetzung mittels Destillation entfernt worden sein.
Das aromatische Monoepoxid ist bevorzugt ein Kresylglycidylether, insbesondere ortho-Kresylglycidylether.
Das Polyamin ist bevorzugt 1,2-Propylendiamin oder MPMD.

Ein weiteres besonders bevorzugtes Addukt ist ein Addukt aus mindestens einem Polyamin ausgewählt aus 1,2-Ethylendiamin, 1,2-Propylendiamin und MPMD und mindestens einem aromatischen Diepoxid, welche im Molverhältnis von ungefähr 2/1 umgesetzt sind. Während der Umsetzung kann das Polyamin im Überschuss vorhanden gewesen und nach der Umsetzung mittels Destillation entfernt worden sein.
Das aromatische Diepoxid ist bevorzugt ein Bisphenol-A- oder Bisphenol-F-oder Bisphenol-A/F-Diglycidylether, insbesondere ein kommerziell erhältliches Flüssigharz.
Das Polyamin ist bevorzugt 1,2-Propylendiamin oder MPMD, insbesondere 1,2-Propylendiamin.

Diese Addukte sind einfach zugänglich und weisen eine besonders gute Verträglichkeit und Reaktivität mit den üblichen Epoxidharz-Zusammensetzungen auf, neigen kaum zu Blushing-Effekten und ermöglichen ausgehärtete Filme von hohem Glanz und hoher Härte.

Der Härter kann weiterhin mindestens einen Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und Cardanol (aus Cashewschalen-ÖI, enthaltend als Hauptbestandteil 3-(8,11,14-Pentadecatrienyl)phenol, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide. Bevorzugt sind Benzylalkohol, Dodecylphenol, tert.Butylphenol, styrolisiertes Phenol, ethoxyliertes Phenol oder phenolgruppenhaltige aromatische Kohlenwasserstoffharze, insbesondere die Novares^{®}-Typen LS 500, LX 200, LA 300 oder LA 700 (von Rütgers).
Bevorzugt enthält der Härter keinen oder nur einen geringen Gehalt an Verdünnern. Bevorzugt enthält er maximal 5 Gewichts-% Verdünner.

Der Härter kann weitere gegenüber Epoxidgruppen reaktive Substanzen enthalten, beispielsweise Monoamine wie Hexylamin oder Benzylamin, oder Mercaptogruppen aufweisende Verbindungen, insbesondere die Folgenden:
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Mercaptan-terminierte Polyoxyalkylen-Ether, erhältlich beispielsweise durch Umsetzung von Polyoxyalkylendi- oder -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Der Härter ist bevorzugt weitgehend frei von Aminen mit einem Molekulargewicht unterhalb von 150 g/mol, insbesondere unterhalb von 120 g/mol. Bevorzugt enthält er weniger als 2 Gewichts-%, insbesondere weniger als 1 Gewichts-%, Amine mit einem Molekulargewicht unterhalb von 150 g/mol, insbesondere unterhalb von 120 g/mol. Eine solcher Härter ist toxikologisch und geruchlich besonders vorteilhaft und ermöglicht Beschichtungen mit besonders schönen Oberflächen.

Der erfindungsgemässe Härter enthält bezogen auf die reaktiven Bestandteile bevorzugt 2 bis 80 Gewichts-%, bevorzugt 5 bis 70 Gewichts-%, besonders bevorzugt 10 bis 70 Gewichts-%, insbesondere 20 bis 60 Gewichts-%, Amin der Formel (I). Solche Härter zeichnen sich durch eine niedrige Viskosität aus und ermöglichen Epoxidharz-Beschichtungen mit hoher Aushärtungsgeschwindigkeit, hoher Härte und schönen Oberflächen.

Bevorzugt sind das Amin der Formel (I), das Amin der Formel (II) und gegebenenfalls weitere Amine im Härter in einer solchen Menge vorhanden, dass von den im Härter insgesamt enthaltenen Aminwasserstoffen
10 bis 70 % aus Aminen der Formel (I),
30 bis 90 % aus Aminen der Formel (II), und
0 bis 40 % aus weiteren Aminen stammen.

Eine solcher Härter ist geruchsarm, weist eine niedrige Viskosität auf und bildet bei Luftkontakt kaum Trübungen oder Krusten. Gegenüber Epoxidharzen weist er eine hohe Verdünnungswirkung bei besonders guter Verträglichkeit und besonders hoher Reaktivität auf. Er ermöglicht somit emissionsarme Epoxidharz-Zusammensetzungen, welche gut verarbeitbar sind, besonders schnell und weitgehend ohne Blushing-Effekte aushärten und dabei Filme von sehr hohem Glanz und hoher Härte bilden.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend einen Härter, welcher mindestens ein Amin der Formel (I) und mindestens ein Amin der Formel (II) umfasst, wie vorgängig beschrieben.

Dabei liegen die Harz- und die Härter-Komponente typischerweise in voneinander getrennten Gebinden vor und sind jede für sich lagerstabil. Sie werden erst unmittelbar vor der Applikation miteinander vermischt, so dass ihre Reaktivgruppen miteinander in Kontakt kommen und die Zusammensetzung aushärtet.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz in der Harz-Komponente bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Bisphenol-F-Novolaken enthalten.

Die Harz-Komponente kann einen Reaktivverdünner, insbesondere einen mindestens eine Epoxidgruppe aufweisenden Reaktivverdünner, enthalten. Als Reaktivverdünner geeignet sind insbesondere die Glycidylether von ein- oder mehrwertigen Phenolen oder aliphatischen oder cycloaliphatischen Alkoholen, wie insbesondere die bereits genannten Polyglycidylether von Di- oder Polyolen, oder weiterhin Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀-Alkylglycidylether oder C₁₂-bis C₁₄-Alkylglycidylether. Die Zugabe eines Reaktivverdünners zum Epoxidharz bewirkt eine Reduktion der Viskosität, und/oder eine Reduktion der Glasübergangstemperatur und/oder der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner, Filmbildehilfsmittel oder Extender, wie insbesondere die bereits genannten Verdünner;
- Reaktivverdünner, insbesondere Epoxidgruppen aufweisende Reaktivverdünner, wie sie vorgängig erwähnt wurden, epoxidiertes Sojaöl oder Leinöl, Acetoacetatgruppen aufweisende Verbindungen, insbesondere acetoacetylierte Polyole, Butyrolakton, Carbonate, Aldehyde, sowie weiterhin Isocyanate oder Reaktivgruppen-aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere, Sulfonamid-modifizierte Melamine oder gereinigte Montan-Wachse;
- anorganische oder organische Füllstoffe, insbesondere gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und/oder Eisenoxide;
- die vorgenannten Beschleuniger;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht oder UV-Strahlung;
- flammhemmende Substanzen, insbesondere Aluminiumhydroxid (ATH), Magnesiumdihydroxid (MDH), Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat oder Bisphenol-A-bis(diphenylphosphat), Tris(chloroethyl)phosphat, Tris(chloropropyl)phosphat oder Tris(dichloroisopropyl)phosphat, Tris[3-bromo-2,2-bis-(bromomethyl)propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine;
- oberflächenaktive Substanzen, insbesondere Netzmittel, Verlaufsmittel, Entlüftungsmittel oder Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und/oder Beschleuniger, insbesondere Salicylsäure und/oder 2,4,6-Tris(dimethylaminomethyl)phenol.

Bevorzugt enthält die Epoxidharz-Zusammensetzung keinen oder nur einen geringen Gehalt an Verdünnern, bevorzugt maximal 5 Gewichts-%, insbesondere maximal 2 Gewichts-%.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.
Beim Vermischen der Harz- und der Härter-Komponente reagieren die in der Epoxidharz-Zusammensetzung vorhandenen Aminwasserstoffe und gegebenenfalls vorhandene weitere gegenüber Epoxidgruppen reaktive Gruppen mit den Epoxidgruppen unter deren Ringöffnung (Additionsreaktion). Als Ergebnis dieser Reaktionen polymerisiert die Zusammensetzung und härtet schliesslich aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.

Die beiden Komponenten der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Harz- und die Härter-Komponente kurz vor oder während der Applikation miteinander vermischt. Das Mischungsverhältnis zwischen den beiden Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt.
Mit der Vermischung der beiden Komponenten beginnt die Aushärtung durch chemische Reaktion, wie vorgängig beschrieben. Die Aushärtung erfolgt insbesondere bei Umgebungstemperatur. Sie erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin-oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Faserverbundmatrix für Faserverbundwerkstoffe (Composites) wie insbesondere CFK oder GFK, oder als Vergussmasse, Dichtstoff, Klebstoff, Belag, Beschichtung, Anstrich, Lack, Versiegelung, Grundierung oder Primer. Insbesondere verwendbar ist sie als Vergussmasse, beispielsweise als Elektrovergussmasse, oder als Klebstoff, insbesondere als Karrosserieklebstoff, Sandwichelementklebstoff, Halbschalenklebstoff für Rotorblätter von Windkraftanlagen, Brückenelementklebstoff oder Verankerungsklebstoff.
Insbesondere verwendbar ist sie weiterhin als Belag, Beschichtung, Anstrich, Lack, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden.
Insbesondere verwendbar ist sie weiterhin als Voranstrich, Haftanstrich, Korrosionsschutz-Primer oder zur Hydrophobierung von Oberflächen.
Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung. Besonders vorteilhaft wird die beschriebene Epoxidharz-Zusammensetzung als Beschichtung verwendet.

Ein weiterer Gegenstand der Erfindung ist dementsprechend eine Beschichtung, enthaltend eine Epoxidharz-Zusammensetzung wie vorgängig beschrieben.
Als Beschichtung werden dabei flächig aufgebrachte Beläge aller Art verstanden, insbesondere Anstriche, Lacke, Versiegelungen, Grundierungen oder Primer, wie vorgängig beschrieben, oder Bodenbeläge oder Schutzbeschichtungen, insbesondere auch solche für schweren Korrosionsschutz. Besonders vorteilhaft wird die beschriebene Epoxidharz-Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende oder thixotropierte Beschichtung auf überwiegend ebene Flächen oder als Anstrich appliziert wird. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 4'000 mPa·s, bevorzugt im Bereich von 300 bis 2'000 mPa·s, besonders bevorzugt im Bereich von 300 bis 1'500 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl.
Bei der Aushärtung entstehen typischerweise weitgehend klare, glänzende und nichtklebrige Filme von hoher Härte, welche eine gute Haftung zu verschiedensten Substraten aufweisen.

Aus der Anwendung der Epoxidharz-Zusammensetzung entsteht ein Artikel umfassend die ausgehärtete Zusammensetzung aus der Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist niedrigviskos und geruchsarm und härtet schnell und weitgehend ohne Blushing-Effekte aus, sogar mit geringen Anteilen oder ganz ohne die Verwendung von Verdünnern, und insbesondere auch ohne die Verwendung von leichtflüchtigen, geruchsintensiven Aminen. Bei der flächigen Verwendung als Beschichtung entstehen klare, nichtklebrige Filme von hoher Härte und hoher Oberflächenqualität, welche unter Lichteinfluss kaum vergilben. Mit der beschriebenen Epoxidharz-Zusammensetzung sind insbesondere emissionsarme Epoxidharz-Produkte zugänglich, welche die Bedingungen für viele Öko-Gütesiegel erfüllen und gleichzeitig hohen Ansprüchen bezüglich Arbeitssicherheit, Verarbeitungs- und Gebrauchseigenschaften genügen.

Ein weiterer Gegenstand der Erfindung ist die Verwendung eines Amins der Formel (I), wie vorgängig beschrieben, als Bestandteil eines Härters für Epoxidharze.
Das Amin der Formel (I) ermöglicht gut verarbeitbare, niedrigviskose Epoxidharz-Zusammensetzungen mit schneller Aushärtung, hoher Härte, schönen Oberflächen und überraschend wenig Vergilbung, welche auch bei tiefen Temperaturen und hohen Luftfeuchtigkeiten schnell und störungsfrei aushärten.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" wird eine Temperatur von 23±1 °C und eine relative Luftfeuchtigkeit von 50±5% bezeichnet. "NK" steht für "Normklima".

### Beschreibung der Messmethoden:

**Infrarotspektren** (FT-IR) wurden als unverdünnte Filme auf einem mit horizontaler ATR-Messeinheit mit ZnSe-Kristall ausgestatteten FT-IR Gerät 1600 von Perkin-Elmer gemessen; die Absorptionsbanden sind in Wellenzahlen (cm⁻¹) angegeben (Messfenster: 4000-650 cm⁻¹).
Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.
Die **Aminzahl** wurde durch Titration bestimmt (mit 0.1N HClO₄ in Essigsäure gegen Kristallviolett).

### Verwendete Substanzen:

| | |
|---|---|
| Araldite^{®} DY-K: | Kresylglycidylether, EEW ca. 182 g/Eq (von Huntsman) |
| Araldite^{®} GY 250: | Bisphenol-A-Diglycidylether, EEW ca. 187.5 g/Eq (von Huntsman) |
| Erisys^{®} RDGE-H: | Resorcinol-Diglycidylether, EEW ca. 118.5 g/Eq (von Emerald Performance Materials) |
| Araldite^{®} DY-C: | Cyclohexandimethanol-Diglycidylether, EEW ca. 160.5 g/Eq (von Huntsman) |
| D.E.R^{®} 736P: | Dipropylenglykol-Diglycidylether, EEW ca. 190 g/Eq (von Dow) |
| Araldite^{®} DY-E: | Monoglycidylether von C₁₂- bis C₁₄-Alkoholen, EEW ca. 290 g/Eq (von Huntsman) |

### Herstellung von Aminen der Formel (II)

### N-Benzyl-1,2-propandiamin:

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin und Isopropanol entfernt wurden. Es wurde eine klare, leicht gelbliche Flüssigkeit erhalten. Davon wurden 300 g bei 80 °C unter Vakuum destilliert, wobei 237.5 g Destillat bei einer Dampftemperatur von 60 bis 63 °C und 0.08 bis 0.09 bar aufgefangen wurden. Erhalten wurde eine farblose Flüssigkeit mit einer Viskosität von 8.5 mPa·s bei 20 °C und einer Aminzahl von 682 mg KOH/g, welche gemäss ¹H-NMR eine Mischung aus N¹-Benzyl-1,2-propandiamin und N²-Benzyl-1,2-propandiamin im Verhältnis von ca. 2/1 darstellte und eine GC-Reinheit von >97% aufwies.

### N-Benzyl-1,2-ethandiamin:

In einem Rundkolben wurden 120.2 g (2 mol) 1,2-Ethylendiamin unter Stickstoffatmosphäre bei Raumtemperatur vorgelegt. Unter gutem Rühren wurde langsam eine Lösung aus 42.4 g (0.4 mol) Benzaldehyd in 800 ml Isopropanol dazugetropft und 2 Stunden nachgerührt. Die Reaktionsmischung wurde anschliessend bei einem Wasserstoff-Druck von 90 bar, einer Temperatur von 90 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Ethylendiamin und Isopropanol entfernt wurden. Es wurde eine klare, leicht gelbliche Flüssigkeit erhalten. Davon wurden 50 g bei 80 °C unter Vakuum destilliert, wobei 31.3 g Destillat bei einer Dampftemperatur von 60 bis 65 °C und 0.06 bar aufgefangen wurden. Erhalten wurde eine farblose Flüssigkeit mit einer Viskosität von 8.3 mPa·s bei 20 °C und einer Aminzahl von 749.6 mg KOH/g, welche eine GC-Reinheit von >97% aufwies.

### Herstellung von Härtern:

### Addukt 1: Reaktionsmischung umfassend N-Benzyl-1,2-propandiamin und ein Amin der Formel (I) mit X=1,2-Propylen, R=H, A=Benzyl, n=0, m=1 und Z=o-Kresyl

15.00 g (0.091 mol) N-Benzyl-1,2-propandiamin wurden unter Stickstoffatmosphäre vorgelegt und auf 80 °C erwärmt. Unter gutem Rühren wurden langsam 3.75 g (0.021 mol Epoxidgruppen) Araldite^{®} DY-K zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 45.2 mPa·s, einer Aminzahl von 541.3 mg KOH/g und einem theoretischen AHEW von 74.0 g/Eq erhalten. FT-IR: 3026, 2957, 2818, 1602, 1494, 1452, 1373, 1244, 1193, 1121, 1028, 825, 734, 690.

### Addukt 2: Reaktionsmischung umfassend N-Benzyl-1,2-propandiamin und ein Amin der Formel (I) mit X=1,2-Propylen, R=H, A=Benzyl, n=0, m=1 und Z=o-Kresyl

15.00 g (0.091 mol) N-Benzyl-1,2-propandiamin wurden unter Stickstoffatmosphäre vorgelegt und auf 80 °C erwärmt. Unter gutem Rühren wurden langsam 7.50 g (0.041 mol Epoxidgruppen) Araldite^{®} DY-K zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 219 mPa·s, einer Aminzahl von 454.9 mg KOH/g und einem theoretischen AHEW von 96.7 g/Eq erhalten. FT-IR: 3026, 2920, 1601, 1494, 1452, 1373, 1307, 1244, 1192, 1121, 1050, 1028, 824, 746, 690.

### Addukt 3: Reaktionsmischung umfassend N-Benzyl-1,2-propandiamin und ein Amin der Formel (I) mit X=1,2-Propylen, R=H, A=Benzyl, n=0, m=2 und Z=Rest der Formel (IIIa)

15.00 g (0.091 mol) N-Benzyl-1,2-propandiamin wurden unter Stickstoffatmosphäre vorgelegt und auf 80 °C erwärmt. Unter gutem Rühren wurden langsam 3.75 g (0.020 mol Epoxidgruppen) Araldite^{®} GY-250 zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 112 mPa·s, einer Aminzahl von 544.9 mg KOH/g und einem theoretischen AHEW von 74.0 g/Eq erhalten. FT-IR: 3084, 3061, 3026, 2958, 2921, 2819, 1605, 1583, 1509, 1494, 1452, 1372, 1361, 1297, 1248, 1182, 1113, 1073, 1028, 827, 733, 690.

### Addukt 4: Reaktionsmischung umfassend N-Benzyl-1,2-propandiamin und ein Amin der Formel (I) mit X=1,2-Propylen, R=H, A=Benzyl, n=0, m=2 und Z=Rest der Formel (IIIa)

15.00 g (0.091 mol) N-Benzyl-1,2-propandiamin wurden unter Stickstoffatmosphäre vorgelegt und auf 80 °C erwärmt. Unter gutem Rühren wurden langsam 7.50 g (0.040 mol Epoxidgruppen) Araldite^{®} GY-250 zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 4'500 mPa·s, einer Aminzahl von 461.9 mg KOH/g und einem theoretischen AHEW von 96.2 g/Eq erhalten. FT-IR: 3084, 3060, 3027, 2959, 2922, 2869, 2820, 1606, 1581, 1509, 1495, 1452, 1372, 1361, 1296, 1247, 1181, 1107, 1073, 1028, 827, 733, 690.

### Addukt 5: Reaktionsmischung umfassend N-Benzyl-1,2-propandiamin und ein Amin der Formel (I) mit X=1,2-Propylen, R=H, A=Benzyl, n=0, m=2 und Z=Rest der Formel (IIIc)

15.00 g (0.091 mol) N-Benzyl-1,2-propandiamin wurden unter Stickstoffatmosphäre vorgelegt und auf 80 °C erwärmt. Unter gutem Rühren wurden langsam 7.50 g (0.063 mol Epoxidgruppen) Erisys^{®} RDGE-H zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 107 Pa·s, einer Aminzahl von 452.3 mg KOH/g und einem theoretischen AHEW von 106.8 g/Eq erhalten. FT-IR: 3026, 2957, 2869, 2822, 1590, 1492, 1451, 1373, 1333, 1286, 1263, 1182, 1153, 1042, 1028, 943, 831, 734, 690.

### Addukt 6: Reaktionsmischung umfassend N-Benzyl-1,2-propandiamin und ein Amin der Formel (I) mit X=1,2-Propylen, R=H, A=Benzyl, n=0, m=2 und Z=Rest der Formel (IIId)

15.00 g (0.091 mol) N-Benzyl-1,2-propandiamin wurden unter Stickstoffatmosphäre vorgelegt und auf 80 °C erwärmt. Unter gutem Rühren wurden langsam 7.50 g (0.047 mol Epoxidgruppen) Araldite^{®} DY-C zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 2'860 mPa·s, einer Aminzahl von 454.7 mg KOH/g und einem theoretischen AHEW von 99.0 g/Eq erhalten. FT-IR: 2956, 2914, 2849, 1602, 1585, 1494, 1451, 1372, 1118, 1074, 1028, 824, 734, 690.

### Addukt 7: Reaktionsmischung umfassend N-Benzyl-1,2-propandiamin und ein Amin der Formel (I) mit X=1,2-Propylen, R=H, A=Benzyl, n=0, m=2 und Z=Rest der Formel (IIIe)

15.00 g (0.091 mol) N-Benzyl-1,2-propandiamin wurden unter Stickstoffatmosphäre vorgelegt und auf 80 °C erwärmt. Unter gutem Rühren wurden langsam 7.50 g (0.039 mol Epoxidgruppen) D.E.R^{®} 736P zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 560 mPa·s, einer Aminzahl von 459.8 mg KOH/g und einem theoretischen AHEW von 96.0 g/Eq erhalten.
FT-IR: 3061, 3026, 2960, 2869, 1602, 1585, 1494, 1452, 1373, 1107, 1063, 1028,824,734,690.

### Addukt 8: Reaktionsmischung umfassend N-Benzyl-1,2-ethandiamin und ein Amin der Formel (I) mit X=1,2-Ethylen, R=H, A=Benzyl, n=0, m=2 und Z=Rest der Formel (IIIa)

15.00 g (0.10 mol) N-Benzyl-1,2-ethandiamin wurden unter Stickstoffatmosphäre vorgelegt und auf 80 °C erwärmt. Unter gutem Rühren wurden langsam 7.50 g (0.04 mol Epoxidgruppen) Araldite^{®} GY-250 zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 2'810 mPa·s, einer Aminzahl von 495.6 mg KOH/g und einem theoretischen AHEW von 86.7 g/Eq erhalten. FT-IR: 3084, 3060, 3026, 2922, 2867, 2819, 1949, 1879, 1812, 1606, 1581, 1508, 1494, 1452, 1383, 1360, 1296, 1247, 1182, 1107, 1028, 910, 871, 827, 806, 733, 690.

### Addukt 9: Reaktionsmischung umfassend N-Benzyl-1,2-ethandiamin und ein Amin der Formel (I) mit X=1,2-Ethylen, R=H, A=Benzyl, n=0, m=2 und Z=Rest der Formel (IIIc)

15.00 g (0.100 mol) N-Benzyl-1,2-ethandiamin wurden unter Stickstoffatmosphäre vorgelegt und auf 80 °C erwärmt. Unter gutem Rühren wurden langsam 7.50 g (0.063 mol Epoxidgruppen) Erisys^{®} RDGE-H zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 21.0 Pa·s, einer Aminzahl von 471.9 mg KOH/g und einem theoretischen AHEW von 95.2 g/Eq erhalten. FT-IR: 3026, 2957, 2869, 2822, 1590, 1492, 1451, 1373, 1333, 1286, 1263, 1182, 1153, 1042, 1028, 943, 831, 734, 690.

### Addukt 10: Reaktionsmischung umfassend N-Benzyl-1,2-ethandiamin und ein Amin der Formel (I) mit X=1,2-Ethylen, R=H, A=Benzyl, n=0, m=2 und Z=Rest der Formel (IIId)

15.00 g (0.100 mol) N-Benzyl-1,2-ethandiamin wurden unter Stickstoffatmosphäre vorgelegt und auf 80 °C erwärmt. Unter gutem Rühren wurden langsam 7.50 g (0.047 mol Epoxidgruppen) Araldite^{®} DY-C zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 1'760 mPa·s, einer Aminzahl von 481.8 mg KOH/g und einem theoretischen AHEW von 89.0 g/Eq erhalten. FT-IR: 3084, 3060, 3026, 2912, 2847, 1601, 1494, 1451, 1356, 1117, 1027, 908, 802, 733, 690.

### Addukt 11: Reaktionsmischung umfassend N-Benzyl-1,2-ethandiamin und ein Amin der Formel (I) mit X=1,2-Ethylen, R=H, A=Benzyl, n=0, m=2 und Z=Rest der Formel (IIIe)

15.00 g (0.100 mol) N-Benzyl-1,2-ethandiamin wurden unter Stickstoffatmosphäre vorgelegt und auf 80 °C erwärmt. Unter gutem Rühren wurden langsam 7.50 g (0.039 mol Epoxidgruppen) D.E.R^{®} 736P zugegeben, wobei die Temperatur der Reaktionsmischung durch Kühlung zwischen 70 und 85 °C gehalten wurde. Die Reaktionsmischung wurde dann während 2 Stunden bei 80 °C belassen und anschliessend abgekühlt. Es wurde eine klare, leicht gelbliche Flüssigkeit mit einer Viskosität bei 20 °C von 1'070 mPa·s, einer Aminzahl von 482.2 mg KOH/g und einem theoretischen AHEW von 86.5 g/Eq erhalten. FT-IR: 3061, 3026, 2860, 1602, 1494, 1452, 1372, 1342, 1106, 1027, 967, 909, 803, 734, 690.

### Herstellung von Epoxidharz-Zusammensetzungen

Für jedes Beispiel wurden die in den Tabellen 1 oder 2 angegebenen Inhaltsstoffe in den angegebenen Mengen (in Gewichtsteilen) der Härter-Komponente mittels eines Zentrifugalmischers (SpeedMixer™ DAC 150, FlackTek Inc.) vermischt und unter Ausschluss von Feuchtigkeit aufbewahrt.
Ebenso wurden die in den Tabellen 1 oder 2 angegebenen Inhaltsstoffe der Harz-Komponente verarbeitet und aufbewahrt.
Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C bestimmt **("Viskosität (10')").**

Ein erster Film wurde in einer Schichtdicke von 500 µm auf eine Glasplatte aufgezogen und dieser Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend während 3 Wochen im NK gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "Aspekt (8°/80%)" bezeichnet), auf die gleiche Weise wie für den Aspekt (NK) beschrieben. Dabei wurde jeweils auch die Anzahl Markierungen angegeben, die im Film durch das feuchte Schwämmchen und/ oder den aufgesetzten Deckel sichtbar waren. An den so ausgehärteten Filmen wurde wiederum die Königshärte bestimmt, jeweils nach 7 Tagen bei 8 °C und 80 % relativer Feuchtigkeit ("Königshärte (7d 8°/80%)"), dann nach weiteren 2 Tagen im NK ("Königshärte (+2d NK)"), 7 Tagen im NK ("Königshärte (+7d NK)") und 14d im NK ("Königshärte (+14d NK)").

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)).** Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE Werte von 0.5 bis 1.5 stehen dabei für einen geringfügigen Farbunterschied, 1.5 bis 3 für einen merklichen Farbunterschied, 3 bis 6 für einen deutlich sichtbaren Farbunterschied und mehr als 6 für einen grossen Farbunterschied.
Die Resultate sind in den Tabellen 1 oder 2 angegeben.
Bei den Epoxidharz-Zusammensetzungen ***EZ-1*** bis ***EZ-11*** handelt es sich um erfindungsgemässe Beispiele. Bei den Epoxidharz-Zusammensetzungen ***Ref-1*** und ***Ref-2*** handelt es sich um Vergleichsbeispiele.

**Tabelle 1: Zusammensetzung und Eigenschaften von EZ-1 bis EZ-7 und Ref-1.**

| **Beispiel** | | | ***Ref-1*** | ***EZ-1*** | ***EZ-2*** | ***EZ-3*** | ***EZ-4*** | ***EZ-5*** | ***EZ-6*** | ***EZ-7*** |
|---|---|---|---|---|---|---|---|---|---|---|
| **Harz-Komponente:** | | | | | | | | | | |
| | Araldite^{®} GY-250 | | 167.2 | 167.2 | 167.2 | 167.2 | 167.2 | 167.2 | 167.2 | 167.2 |
| | Araldite^{®} DY-E | | 31.8 | 31.8 | 31.8 | 31.8 | 31.8 | 31.8 | 31.8 | 31.8 |
| **Härter-Komponente:** | | | | | | | | | | |
| | N-Benzyl-1,2-propandiamin | | 54.7 | - | - | - | - | - | - | - |
| | Addukt | | - | **1** | **2** | **3** | **4** | **5** | **6** | **7** |
| | | | | 74.0 | 96.7 | 74.0 | 96.2 | 106.8 | 99.0 | 96.0 |
| Viskosität (10') [Pa·s] | | | 0.30 | 0.56 | 0.99 | 0.75 | 2.49 | 9.10 | 2.00 | 1.36 |
| Königshärte [s] | | (1d NK) | 61 | 44 | 29 | 70 | 84 | 100 | 41 | 21 |
| | | (2d NK) | 137 | 129 | 102 | 174 | 178 | 172 | 125 | 87 |
| | | (4d NK) | 185 | 164 | 148 | 200 | 205 | 200 | 183 | 153 |
| | | (7d NK) | 195 | 200 | 182 | 210 | 213 | 213 | 203 | 183 |
| | | (14d NK) | 209 | 209 | 199 | 223 | 221 | 220 | 211 | 199 |
| Aspekt (NK) | | | schön | schön | schön | schön | schön | schön | schön | schön |
| Q-Sun (72h) ΔE | | | 1.1 | 2.1 | 2.3 | 2.8 | 2.6 | 1.5 | 1.3 | 1.3 |
| Königsh. [s] | | (7d 8°/80%) | 70 | 73 | 55 | 80 | 83 | 84 | 57 | 39 |
| | | (+2d NK) | 164 | 137 | 140 | 190 | 190 | 189 | 172 | 151 |
| | | (+7d NK) | 189 | 194 | 176 | 204 | 204 | 200 | 204 | 183 |
| | | (+14d NK) | 204 | 199 | 197 | 203 | 207 | 207 | 207 | 195 |
| Aspekt (8°/80%) | | | schön | schön | schön | schön | schön | leicht matt | schön | schön |
| Anzahl Markierungen | | | 1 | 1 | 1 | 1 | 1 | 1 | 1 | 2 |

**Tabelle 2: Zusammensetzung und Eigenschaften von EZ-8 bis EZ-11 und Ref-2.**

| **Beispiel** | | | ***Ref-2*** | ***EZ-8*** | ***EZ-9*** | ***EZ-10*** | ***EZ*-*11*** |
|---|---|---|---|---|---|---|---|
| **Harz-Komponente:** | | | | | | | |
| | Araldite^{®} GY-250 | | 167.2 | 167.2 | 167.2 | 167.2 | 167.2 |
| | Araldite^{®} DY-E | | 31.8 | 31.8 | 31.8 | 31.8 | 31.8 |
| **Härter-Komponente:** | | | | | | | |
| | N-Benzyl-1,2-ethand iam in | | 50.1 | - | - | - | - |
| | | Addukt | - | **8** | **9** | **10** | **11** |
| | | | | 86.7 | 95.2 | 89.0 | 86.5 |
| Viskosität (10') [Pa·s] | | | 0.33 | 2.68 | 6.7 | 2.49 | 2.21 |
| Königshärte [s] | | (1d NK) | 34 | 138 | 143 | 75 | 36 |
| | | (2d NK) | 79 | 172 | 178 | 123 | 59 |
| | | (4d NK) | 136 | 190 | 197 | 155 | 83 |
| | | (7d NK) | 163 | 200 | 206 | 169 | 110 |
| | | (14d NK) | 167 | 203 | 213 | 178 | 120 |
| Aspekt (NK) | | | schön | schön | schön | schön | schön |
| Q-Sun (72h) ΔE | | | 3.4 | 2.9 | 2.1 | 2.3 | 2.7 |
| Königshärte [s] | | (7d 8°/80%) | 35 | 76 | 43 | 84 | 21 |
| | | (+2d NK) | 110 | 147 | 169 | 108 | 57 |
| | | (+7d NK) | 143 | 162 | 178 | 133 | 85 |
| | | (+14d NK) | 151 | 167 | 185 | 139 | 90 |
| Aspekt (8°/80%) | | | leicht matt | leicht matt | leicht matt | leicht matt | leicht matt |
| Anzahl Markierungen | | | 1 | 2 | 1 | 1 | 1 |

## Patentansprüche

1. Härter für Epoxidharze, umfassend
- mindestens ein Amin der Formel (I), 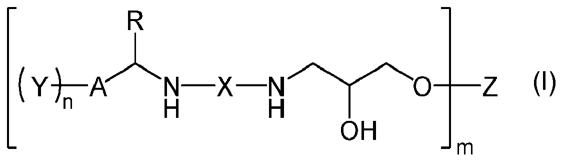
- und mindestens ein Amin der Formel (II), 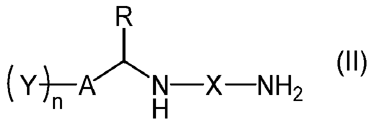 wobei
X für 1,2-Ethylen oder 1,2-Propylen steht,
R für einen Wasserstoff-Rest oder für einen Kohlenwasserstoff-Rest mit 1 bis 6 C-Atomen steht,
A für einen fünf-, sechs- oder siebengliedrigen, im Ring gegebenenfalls ein Sauerstoff-, Schwefel- oder Stickstoffatom aufweisenden Cycloalkyl-oder Aryl-Rest mit 4 bis 7 C-Atomen steht,
Y für gleiche oder verschiedene Reste ausgewählt aus der Gruppe bestehend aus Alkyl, Alkoxy und Dialkylamino mit 1 bis 18 C-Atomen steht, n für 0 oder 1 oder 2 oder 3 steht,
m für 1 oder 2 oder 3 steht, und
Z für einen m-wertigen, gegebenenfalls Ether-Sauerstoff aufweisenden Kohlenwasserstoff-Rest mit einem Molekulargewicht im Bereich von 56 bis 1500 g/mol steht.

2. Härter gemäss Anspruch 1, **dadurch gekennzeichnet, dass** X für 1,2-Propylen steht.

3. Härter gemäss einem der Ansprüche 1 oder 2, **dadurch gekennzeichnet, dass** R für einen Wasserstoff-Rest oder für Methyl steht.

4. Härter gemäss einem der Ansprüche 1 bis 3, **dadurch gekennzeichnet, dass** A für einen gegebenenfalls mit Y substituierten Phenyl-Rest steht.

5. Härter gemäss einem der Ansprüche 1 bis 4, **dadurch gekennzeichnet, dass** X für 1,2-Propylen, R für einen Wasserstoff-Rest, A für einen Phenyl-Rest und n für 0 stehen.

6. Härter gemäss einem der Ansprüche 1 bis 5, **dadurch gekennzeichnet, dass** m für 1 oder 2 steht und Z für einen Rest ausgewählt aus der Gruppe bestehend aus den einwertigen Resten Phenyl, Kresyl, p-tert.Butylphenyl, 4-Dodecylphenyl, 3-(8,11,14-Pentadecatrienyl)phenyl, Benzyl, Butyl, Hexyl, 2-Ethylhexyl, C₈₋₁₀-Alkyl, C₁₂₋₁₃-Alkyl und C₁₂₋₁₄-Alkyl, und den zweiwertigen Resten 1,4-Butylen, 1,6-Hexylen, Neopentylen und den Resten der Formeln (IIIa), (IIIb), (IIIc), (IIId) und (IIIe), 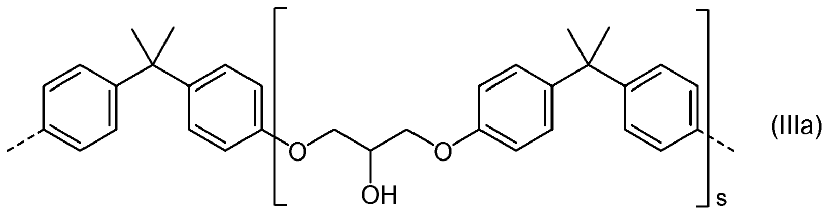 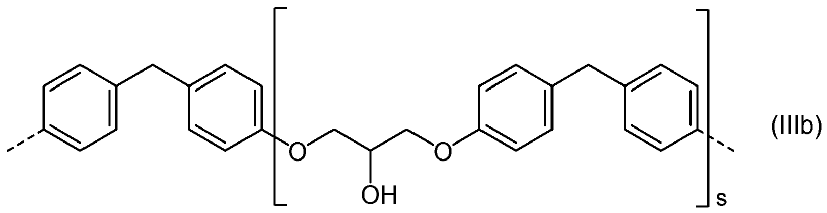 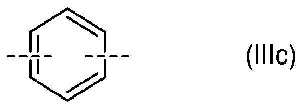 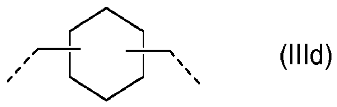 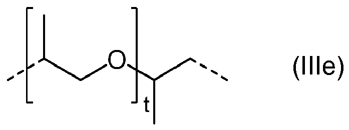 wobei s für 0 bis 3 und t für 1 bis 20 stehen,
steht.

7. Härter gemäss einem der Ansprüche 1 bis 6, **dadurch gekennzeichnet, dass** das Amin der Formel (I) erhalten wird aus der Umsetzung von mindestens einem Amin der Formel (II) mit mindestens einem Glycidylether der Formel (IV).

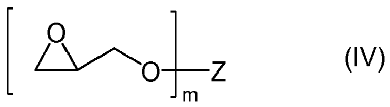

8. Härter gemäss Anspruch 7, **dadurch gekennzeichnet, dass** das Amin der Formel (II) bei der Umsetzung im Überschuss vorhanden ist und der Überschuss nach der Umsetzung nicht aus dem Reaktionsprodukt entfernt wird.

9. Härter gemäss einem der Ansprüche 1 bis 8, **dadurch gekennzeichnet, dass** zusätzliche mindestens ein weiteres Amin, das nicht der Formel (I) oder (II) entspricht, und/oder mindestens ein Beschleuniger enthalten ist.

10. Härter gemäss einem der Ansprüche 1 bis 9, **dadurch gekennzeichnet, dass** er bezogen auf die reaktiven Bestandteile 2 bis 80 Gewichts-% Amin der Formel (I) enthält.

11. Härter gemäss einem der Ansprüche 1 bis 10, **dadurch gekennzeichnet, dass** das Amin der Formel (I), das Amin der Formel (II) und gegebenenfalls weitere Amine in einer solchen Menge vorhanden sind, dass von den im Härter insgesamt enthaltenen Aminwasserstoffen
10 bis 70 % aus Aminen der Formel (I),
30 bis 90 % aus Aminen der Formel (II), und
0 bis 40 % aus weiteren Aminen stammen.

12. Epoxidharz-Zusammensetzung umfassend
- eine Harz-Komponente enthaltend mindestens ein Epoxidharz und
- eine Härter-Komponente enthaltend einen Härter gemäss einem der Ansprüche 1 bis 11.

13. Beschichtung enthaltend eine Epoxidharz-Zusammensetzung wie in Anspruch 12 beschrieben.

14. Ausgehärtete Zusammensetzung erhalten aus der Aushärtung einer Epoxidharz-Zusammensetzung gemäss Anspruch 12 oder einer Beschichtung gemäss Anspruch 13.

15. Verwendung eines Amins der Formel (I) wie in einem der Ansprüche 1 bis 8 beschrieben als Bestandteil eines Härters für Epoxidharze.
